(19) Europäisches Patentamt
European Patent Office
Office européen des brevets

(11) **EP 4 570 531 A1**

(12) **EUROPÄISCHE PATENTANMELDUNG**

(43) Veröffentlichungstag:
**18.06.2025 Patentblatt 2025/25**

(21) Anmeldenummer: **24213468.2**

(22) Anmeldetag: **18.11.2024**

(51) Internationale Patentklassifikation (IPC):
***B60C 11/24*** *(2006.01)*

(52) Gemeinsame Patentklassifikation (CPC):
**B60C 11/243; B60C 11/246; B60W 40/12**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **15.12.2023 DE 102023212773**

(71) Anmelder: **Continental Reifen Deutschland GmbH
30175 Hannover (DE)**

(72) Erfinder:
• **Sahlmüller, Baldo, Dr.
30175 Hannover (DE)**
• **Cyllik, Adrian, Dr.
30175 Hannover (DE)**
• **Surisetti, Siva Sankar
30175 Hannover (DE)**
• **Boisset, Jean-Philippe
31100 Toulouse (FR)**

(74) Vertreter: **Continental Corporation
c/o Continental AG
Intellectual Property
Postfach 169
30001 Hannover (DE)**

(54) **VERFAHREN UND SYSTEM ZUM GENERIEREN UND ÜBERMITTELN VON OPTIMIERTEN REIFENSPEZIFISCHEN MESSDATEN**

(57) Die Erfindung betrifft ein Verfahren zum Generieren und Übermitteln von optimierten reifenspezifischen Messdaten von einem Reifensensor (4) eines Fahrzeugreifens (3) an eine externe Empfängereinheit (5), umfassend die Schritte:

a) Messen eines Radialbeschleunigungsverlaufs mittels des Reifensensors (4) während der Fahrt;

b) Bestimmen einer Änderung der Radialbeschleunigung anhand des Radialbeschleunigungsverlaufs;

c) Bestimmen von die Radialbeschleunigung betreffenden Kenngrößen anhand der Änderung der Radialbeschleunigung;

d) Ermitteln eines aktuellen gleitenden Mittelwertes für mindestens eine der Kenngrößen auf Basis eines aktuellen Messwertes der jeweiligen Kenngröße sowie eines gleitenden Mittelwertes derselben Kenngröße einer vorhergehenden Messung sowie mit Hilfe von Gewichtungsfaktoren;

e) Übermitteln des aktuellen gleitenden Mittelwertes der jeweiligen Kenngröße an die externe Empfängereinheit (5). Ferner betrifft die Erfindung ein System zum Generieren und Übermitteln von fortlaufend optimierten reifenspezifischen Messdaten.

FIG 1

EP 4 570 531 A1

## EP 4 570 531 A1

## Beschreibung

Die Erfindung betrifft ein Verfahren zum Generieren und Übermitteln von optimierten reifenspezifischen Messdaten. Ferner betrifft die Erfindung ein System zum Generieren und Übermitteln von optimierten reifenspezifischen Messdaten. Das System ist dazu eingerichtet, das Verfahren auszuführen.

Reifen-Sensor-Module sind üblicherweise an einer Reifeninnenseite, insbesondere einem Innerliner, eines Fahrzeugreifens angeordnet, um Kenngrößen des Fahrzeugreifens, beispielsweise einen Reifendruck oder eine Reifentemperatur, bestimmen und über ein Funksignal an ein Steuergerät übermitteln zu können. Reifen-Sensor-Module können ferner eine Beschleunigung erfassen, wobei insbesondere eine Radialbeschleunigung der Reifeninnenseite ermittelt werden kann. Über die Analyse der Radialbeschleunigung am Innerliner kann der Reifenabrieb und somit die Profiltiefe abgeschätzt werden.

Eine Herausforderung stellt hierbei allerdings die Übertragung der Daten dar, da nicht immer gewährleistet werden kann, dass am Fahrzeug weitere Geräte zum Empfang und zur weiteren Verarbeitung der Daten der Sensoren zur Verfügung stehen. Die Sensoren übertragen zur Abschätzung der Profiltiefe beispielsweise das Minimum und das Maximum der Änderung der Radialbeschleunigung während eines Reifenumlaufs, wobei dieses Minimum bzw. Maximum an den Rändern des Kontaktbereichs auftritt, also bevor der Messpunkt in einen Latschdurchgang gelangt bzw. aus dem Latschdurchgang austritt. Aufgrund verschiedener Effekte, beispielsweise der Oberfläche des Untergrunds, können diese Minima und Maxima jedoch Schwankungen aufweisen, so dass eine einzelne Messung nicht immer zu einer zuverlässigen Abschätzung des Abriebs führt. Allerdings können, insbesondere bei einer stationären Empfangslösung, in der Regel nur Messdaten einer einzigen Messung übertragen werden, wobei die darauffolgende Übertragung erst beim nächsten Kontakt des Fahrzeugs mit der Empfangseinheit stattfinden kann. Eine Mittelwertbildung mehrerer erfasster Messwerte ist ebenfalls nachteilhaft, da hierfür eine größere Anzahl an Messwerten auf dem Reifensensor gespeichert werden müsste, was auf üblichen Reifensensoren aufgrund der sehr kleinen Speicherkapazitäten und der begrenzten Energiekapazitäten auch nicht kostengünstig möglich ist.

Aus der US 20180188025 A1 geht beispielsweise ein Verfahren zur Schätzung eines Verschleißgrades eines Reifens hervor. Der Verschleißgrad wird geschätzt, indem ein Index der Verformungsgeschwindigkeit an einer Reifenkontaktkante oder in der Nähe der Reifenkontaktkante verwendet wird, wobei der Index der Verformungsgeschwindigkeit aus der Größe eines oder beider positiver und negativer Spitzen berechnet wurde, die durch Differenzieren einer Zeitserien-Wellenform der Radialbeschleunigung des Reifens, die wiederum von einem am Reifen angebrachten Beschleunigungssensor erfasst wird, ermittelt wird. Ferner wird ein Kontaktzeitverhältnis von Kontaktzeit zu Reifenrotationszeit bestimmt, wobei die Kontaktzeit ein Zeitintervall zwischen dem positiven Peak und dem negativen Peak ist, und wobei die Reifenrotationszeit ein Zeitintervall zwischen entweder positiven Peaks oder negativen Peaks ist. Außerdem wird ein Verformungsbetrag zur Schätzung des Verschleißgrades verwendet, der eine Differenz zwischen einem Reifenradius und einem effektiven Radius ist, wobei der Reifenradius ein Radius des Reifens im unbelasteten Zustand und der effektive Radius ein Radius des Reifens während der Fahrt ist.

Die Aufgabe der vorliegenden Erfindung besteht darin, ein stabiles, energiesparendes Verfahren und System zum Generieren und Übermitteln von reifenspezifischen Messdaten vorzuschlagen. Die Aufgabe wird gelöst durch den jeweiligen Gegenstand von Patentanspruch 1 und 10. Bevorzugte Ausführungsformen sind Gegenstand der abhängigen Ansprüche.

Gemäß einem ersten Erfindungsaspekt wird ein Verfahren zum Generieren und Übermitteln von optimierten reifenspezifischen Messdaten von einem Reifensensor eines Fahrzeugreifens an eine externe Empfängereinheit vorgeschlagen, wobei das Verfahren folgende Schritte umfasst:

a) Messen eines Radialbeschleunigungsverlaufs mittels des Reifensensors während der Fahrt;
b) Bestimmen einer Änderung der Radialbeschleunigung anhand des Radialbeschleunigungsverlaufs;
c) Bestimmen von die Radialbeschleunigung betreffenden Kenngrößen anhand der Änderung der Radialbeschleunigung;
d) Ermitteln eines aktuellen gleitenden Mittelwertes für mindestens eine der Kenngrößen auf Basis eines aktuellen Messwertes der jeweiligen Kenngröße sowie eines gleitenden Mittelwertes derselben Kenngröße einer vorhergehenden Messung sowie mit Hilfe von Gewichtungsfaktoren;
e) Übermitteln des aktuellen gleitenden Mittelwertes der jeweiligen Kenngröße an die externe Empfängereinheit.

Durch das Verfahren kann ein aktueller gleitender Mittelwert der jeweiligen Kenngröße mit geringem Speicherbedarf fortgeschrieben werden, da der aktuelle gleitende Mittelwert, auch laufender Mittelwert genannt, stets unter Berücksichtigung der aktuellen Messergebnisse sowie der Messergebenisse einer zeitlich zurückliegenden Messung des Radialbeschleunigungsverlaufs ermittelt wird. Der aktuelle gleitende Mittelwert wird mittels eines gewichteten gleitenden Mittelwertfilters ermittelt, der sowohl gegenwärtige als auch vorherige Werte berücksichtigt. Der aktuelle gleitende Mittelwert wird dabei durch die Gewichtungsfaktoren mehr und stärker durch die aktuellen Messwerte beeinflusst als durch die ermittelten Werte früherer Messungen.

Wenn ein aktueller gleitender Mittelwert ermittelt wird, wird dieser als optimierter Mittelwert an Stelle des zuvor ermittelten gleitenden Mittelwertes derselben Kenngröße einer vorhergehenden Messung gespeichert, der wiederum vorher an Stelle des davor ermittelten gleitenden Mittelwertes derselben Kenngröße als optimierter Mittelwert gespeichert wurde, und so weiter. Anders gesagt aktualisiert der Reifensensor den aktuellen gleitenden Mittelwert stetig als einen neuen Datensatz basierend auf den Gewichtungsfaktoren. Bei dem auf dem Reifensensor gespeicherten gleitenden Mittelwert handelt es sich also um einen fortgeschriebenen, optimierten Mittelwert.

Der gleitende Mittelwert hat gegenüber einer Mittelung z.B. der letzten zehn Messungen des Radialbeschleunigungsverlaufs den Vorteil, dass nur der laufende Mittelwert der jeweiligen Kenngröße als neuer Datensatz gespeichert werden muss und nicht eine Vielzahl an Messungen. Frühere Datensätze können von dem neuen Datensatz überschrieben oder separat gelöscht werden, sodass nur der aktuellste Datensatz betreffend den aktuellen gleitenden Mittelwert der zuletzt stattgefundenen Messung auf dem Reifensensor gespeichert ist. Wenn mehrere Kenngrößen bestimmt werden, kann für jede Kenngröße ein aktueller gleitender Mittelwert ermittelt werden und als Datensatz auf dem Reifensensor gespeichert und mit jeder neuen Messung, also bei Wiederholung der Schritte a) bis c) oder a) bis d), aktualisiert werden.

Der aktuelle gleitende Mittelwert der jeweiligen Kenngröße kann, nachdem er an die Empfängereinheit übermittelt wurde, zur Ermittlung eines Reifenabriebs bzw. einer verbleibenden Profiltiefe des Fahrzeugreifens, zur Ermittlung eines Luftdrucks innerhalb des Fahrzeugreifens und/oder zur Ermittlung einer Radlast weiterverwendet werden. Mit anderen Worten kann der jeweilige aktuelle gleitende Mittelwert zur Ermittlung der Profiltiefe des Fahrzeugreifens, zur Ermittlung einer Radlast und/oder eines innerhalb des Fahrzeugreifens vorliegenden Luftdrucks herangezogen werden. Entsprechend kann die Empfängereinheit dazu eingerichtet sein, mittels des aktuellen gleitenden Mittelwertes der jeweiligen Kenngröße einen Reifenabrieb bzw. eine verbleibende Profiltiefe des Fahrzeugreifens, einen Luftdruck innerhalb des Fahrzeugreifens und/oder eine Radlast zu ermitteln.

In Vorbereitung des Verfahrens können auf bekannte Weise reifenspezifische Variablen, insbesondere Variablen, die mit der Profiltiefe und/oder der Radlast des jeweiligen Fahrzeugreifens bzw. Fahrzeugrades, das den Reifen umfasst, zusammenhängen. Der Reifensensor ist dazu eingerichtet, die definierten Variablen aus dem Messsignal zu bestimmen.

Der Radialbeschleunigungsverlauf wird vorzugsweise an einer Reifeninnenseite des Fahrzeugreifens, insbesondere am Innerliner des Fahrzeugreifens, gemessen. Mit anderen Worten ist der Reifensensor an der Innenseite bzw. dem der Felge zugewandten Seite des Fahrzeugreifens angeordnet. Die Messung des Radialbeschleunigungsverlaufs erfolgt während der Fahrt in bestimmten, vordefinierten Zeitabständen und/oder bei bestimmten, vordefinierten Betriebssituationen, sodass mehrere Messungen oder eine über einen definierten Zeitraum erfolgende Messung der Radialbeschleunigung erfolgen kann. Aus jedem Radialbeschleunigungsverlauf wird eine Änderung der Radialbeschleunigung bestimmt, aus der Werte der Kenngrößen ermittelt werden können, die zur Bestimmung eines aktuellen gleitenden Mittelwertes für die jeweilige Kenngröße weiterverwendet werden können. Die Schritte a) bis c) oder a) bis d) können wiederholt werden, um einen möglichst realitätsnahen, aktuellen gleitenden Mittelwert der jeweiligen Kenngröße bereitzustellen, bis eine Übermittlung an die Empfängereinheit erfolgt.

Vorzugsweise werden die Messdaten des Radialbeschleunigungsverlaufs mittels eines Filters geglättet. Anders gesagt wird die sich aus dem gemessenen Radialbeschleunigungsverlauf ergebende Zeitreihe mit einem Filter geglättet. Der Filter ist ein Tiefpassfilter oder ein Bandpassfilter. Der Filter wird dazu verwendet, bestimmte Frequenzbereiche zu passieren oder zu blockieren. Ein Tiefpassfilter hat den Vorteil, Hochfrequenzen zu blockieren und nur Niederfrequenzen passieren zu lassen, womit Störungen oder Rauschen in einem Signal reduzierbar sind. Unter der Glättung von Messdaten ist zu verstehen, dass schnelle Änderungen oder Spitzen im Signal entfernt werden. Ein Bandpassfilter hat demgegenüber den Vorteil, dass er nur Frequenzen innerhalb eines bestimmten Bandes passieren lässt und sowohl niedrige als auch hohe Frequenzen blockiert. Dadurch kann eine gezielte Auswahl und Verarbeitung von Signalen in einem bestimmten Frequenzbereich erfolgen. Bandpassfilter können zudem dazu verwendet werden, bestimmte Störfrequenzen zu blockieren, während sie den gewünschten Frequenzbereich durchlassen. Ein Bandpassfilter kann zudem verwendet werden, um das Signalrauschen außerhalb eines für die Weiterverwendung der Messdaten relevanten Frequenzbereichs zu reduzieren.

Die Änderung der Radialbeschleunigung wird vorzugsweise mittels Differenzierung, insbesondere durch Ableitung des Radialbeschleunigungsverlaufs, bestimmt. Mit anderen Worten wird der Radialbeschleunigungsverlauf mathematisch abgeleitet, um daraus reifenspezifische Kenngrößen bestimmen zu können.

Anhand der Änderung der Radialbeschleunigung, als der Ableitung des gemessenen Radialbeschleunigungsverlaufs, werden die Radialbeschleunigung betreffende Kenngrößen bestimmt. Aus dem Signal des Radialbeschleunigungsverlaufs werden also Extremwerte, insbesondere Minima und Maxima, die sich üblicherweise im Bereich des Randes der Bodenaufstandsfläche bzw. des Latschdurchgangs des Fahrzeugreifens befinden, bestimmt. Insbesondere wird ein Wert des Minimums der Änderung der Radialbeschleunigung, ein Wert des Maximums der Änderung der Radialbeschleunigung, ein zeitlicher Abstand zwischen dem Minimum und dem Maximum und/oder ein zeitlicher Abstand zwischen dem Minimum und dem Maximum im Verhältnis zur Umlaufzeit des Reifens bestimmt.

Für jede definierte und bestimmte Kenngröße kann ein aktueller gleitender Mittelwert ermittelt werden. Vorzugsweise wird für alle bestimmten Kenngrößen ein aktueller gleitender Mittelwert ermittelt, wobei der gleitende Mittelwertfilter angewendet wird, um für jede Kenngröße den aktuellen gleitender Mittelwert zu ermitteln.

Vorzugsweise wird der aktuelle gleitende Mittelwert der jeweiligen Kenngröße ermittelt durch

$$M(neu) = (M(alt) * (1-w) + X(Messung) * w$$

wobei w ein Gewichtungsfaktor zwischen 0 und 1 ist, M(alt) der Mittelwert der jeweiligen Kenngröße nach einer vorhergehenden Messung ist, und X(Messung) der aktuelle Messwert der jeweiligen Kenngröße auf Basis der Änderung der Radialbeschleunigung ist. Durch den Gewichtungsfaktor wird der relative Einfluss oder die Bedeutung des Mittelwertes der früheren Messung und der Messwert der jeweiligen Kenngröße der aktuellen Messung in Bezug auf die Gesamtbewertung der Kenngröße berücksichtigt. Wenn der Gewichtungsfaktor kleiner als 0,5 ist, wird dem Mittelwert der jeweiligen Kenngröße der vorhergehenden Messung mehr Einfluss zugeteilt als der aktuellen Messung derselben Kenngröße. Wenn der Gewichtungsfaktor größer als 0,5 ist, wird der aktuell gemessenen Kenngrößer mehr Einfluss zugeteilt als dem Mittelwert derselben Kenngröße der vorhergehenden Messung. Es ist selbstverständlich, dass der Mittelwertfilter erst ab einer zweiten Messung des Radialbeschleunigungsverlaufs nutzbar ist, also wenn bereits eine Kenngrößenbestimmung stattgefunden hat. Denkbar ist, dass bei einer Inbetriebnahme des Systems eine Initialbestimmung der relevanten Kenngrößen erfolgt oder vorbestimmt wird, sodass der Mittelwertfilter bei der Ermittlung der aktuellen gleitenden Mittelwerte auf Daten vorhergehender Messungen zugreifen kann.

Alternativ wird der aktuelle Mittelwert der jeweiligen Kenngröße ermittelt durch

$$M(neu) = (M(alt) * W + X(Messung)) / (W+1),$$

wobei Wein Gewichtungsfaktor ist, der bevorzugt eine natürliche Zahl, das heißt eine ganze Zahl größer 0, ist. Diese Mittelwertermittlung ist insbesondere vorteilhaft, da ganzzahlige Variablen sich in Computercode gegebenenfalls schneller prozessieren lassen. Diese Mittelwertermittlung ist insbesondere für geringere Gewichtungsfaktoren des jeweiligen aktuellen Messwerts gegenüber dem gleitenden Mittelwert nach einer vorherigen Messung vorteilhaft.

Vorzugsweise ist die jeweilige die Radialbeschleunigung betreffende Kenngröße ein Minimalwert der Radialbeschleunigung im Bereich eines Randes einer Bodenaufstandsfläche des Fahrzeugreifens, ein Maximalwert der Radialbeschleunigung im Bereich des Randes der Bodenaufstandsfläche des Fahrzeugreifens und/oder ein zeitlicher Abstand zwischen dem Minimalwert und dem Maximalwert der Radialbeschleunigung im Bereich des Randes der Bodenaufstandsfläche des Fahrzeugreifens und/oder ein zeitlicher Abstand von Minimum zu Maximum im Verhältnis zur Umlaufzeit des Fahrzeugreifens. Jede, mehrere oder alle der vorgenannten Kenngrößen können als Variablen verwendet werden, für die ein laufender bzw. aktueller gleitender Mittelwert ermittelt werden kann.

Der minimale und/oder maximale Wert der Ableitung des Radialbeschleunigungsverlaufs bzw. der Änderungsrate der Radialbeschleunigung ist ein Indikator für den Reifenabrieb bzw. die verbleibende Profiltiefe des Fahrzeugreifens, der unabhängig von der Radlast ist. Ein Gradient der Radialbeschleunigung ist analysierbar, wobei ein niedriger Gradient ein Indiz für eine große verbleibende Profiltiefe ist und ein hoher Gradient ein Indiz für eine geringe verbleibende Profiltiefe ist.

Ferner kann in dem Signal der zeitliche Abstand zwischen Minima und Maxima bestimmt werden. Der Abstand zwischen Maximal- und Minimalwert ist ein Indikator für die Radlast, der unabhängig vom Reifenabrieb bzw. der Profiltiefe ist. Dabei ist ein geringer Abstand zwischen den Maximal- und Minimalwerten ein Indiz für eine geringe Radlast und ein größerer Abstand zwischen den Maximal- und Minimalwerten ist ein Indiz für eine hohe Radlast.

Aus den ermittelten aktuellen gleitenden Mittelwerten können von dem Reifensensor Daten erzeugt bzw. generiert werden, die zur Übermittlung an einen externe Empfängereinheit bereitgestellt werden können. Die Übermittlung kann von unterschiedlichen Aspekten abhängen. Beispielsweise ist die Empfängereinheit eine stationäre Empfängereinheit. In diesem Fall können die entsprechenden Daten nur dann an die stationäre Empfängereinheit übermittelt werden, wenn sich der Reifensensor im Empfangsbereich der Empfängereinheit befindet. In diesem Fall kann, wenn sich das Fahrzeug mit dem Reifensensor nicht im Empfangsbereich der Empfängereinheit befindet, der aktuelle gleitende Mittelwert unter Berücksichtigung des vorherigen gleitenden Mittelwertes fortlaufend bzw. gleitend ermittelt werden, ohne die Speicherkapazitäten des Reifensensors negativ zu beeinflussen, da frühere Datensätze stets mit neuen bzw. aktuelleren Datensätzen überschrieben werden. Umgekehrt ist sichergestellt, dass die an die Empfängereinheit übermittelten Daten stets Informationen über die aktuellen gleitenden Mittelwerte umfassen, womit beispielsweise die verbleibende Profiltiefe realitätsnah ermittelt werden kann.

In einer Weiterbildung der Erfindung wird der aktuelle gleitende Mittelwert für die jeweilige Kenngröße bestimmt, wenn die jeweilige bestimmte Kenngröße in Bezug auf dieselbe Kenngröße einer vorhergehenden Messung innerhalb von vorgegebenen Grenzwerten liegt. Mit anderen Worten werden die laufenden Mittelwerte, also die aktuellen gleitenden Mittelwerte einer neuen Messung, nur berechnet, wenn bestimmte Qualitätskriterien erfüllt sind. Diese Qualitätskriterien sind beispielsweise ein Vergleich von zwei direkt aufeinanderfolgenden Messungen der oben genannten Variablen, oder ein Vergleich der aktuellen Messung mit dem bisherigen gleitenden Mittelwert, wobei eine Messung nur als gut oder ausreichend bewertet wird, wenn die Abweichung unter- und/oder oberhalb vorgegebener Schwellen bzw. innerhalb von vordefinierten Grenzen liegt. Liegen die neu ermittelten Messdaten außerhalb der Grenzwerte können die Messdaten verworfen werden, wobei erst bei einer darauffolgenden Messung des Radialbeschleunigungsverlaufs ein neuer aktueller gleitender Mittelwert der jeweiligen Kenngröße bestimmt werden kann. Das Verwerfen bzw. Löschen von derartigen Messdaten kann beispielsweise erfolgen, wenn die Messung des Radialbeschleunigungsverlaufs in einer Ausnahmesituation erfolgt, insbesondere wenn das Fahrzeugrad im Moment der Messung einen Bordstein oder ein Schlagloch über- oder durchrollt.

In einer Weiterbildung der Erfindung wird der aktuelle gleitende Mittelwert an die externe Empfängereinheit übermittelt, wenn eine Wahrscheinlichkeit, dass sich der Reifensensor in einem Empfangsbereich der externen Empfängereinheit befindet, einen Grenzwert überschreitet. Die Weiterbildung ist vorteilhaft für stationäre externe Empfängereinheiten einsetzbar. Der Reifensensor ist demnach so aufgesetzt, dass die gleitenden Mittelwerte nur übermittelt werden, wenn sich der Reifensensor in der Nähe der Empfängereinheit befindet. Dies kann über eine interne Beschleunigungsmessung des Fahrzeugs gewährleistet werden, womit ein Stillstand des Fahrzeugs erkannt werden kann. In einem Ausführungsbeispiel wird der aktuelle Mittelwert nur im Stillstand des Fahrzeugreifens bzw. des Fahrzeugs übertragen, insbesondere wenn sich das Fahrzeug für eine vordefinierte Zeit im Stillstand befindet. Dies kann vom System so gewertet werden, dass das Fahrzeug an einem Ort abgestellt wurde, an dem sich die externe Empfängereinheit befindet. Damit kann gewährleistet werden, dass der Reifensensor nur dann ein Signal zur Übermittlung von Daten erzeugt, wenn bestimmte Kriterien erfüllt sind. Ein ungewolltes Erzeugen eines Signals kann so verhindert werden und der Energiespeicher des Reifensensors wird nicht unnötig belastet.

Vorzugsweise wird der aktuelle gleitende Mittelwert ferner durch einen Indikator für eine Laufleistung des Fahrzeugreifens ergänzt. Mit anderen Worten kann mit dem aktuellen gleitenden Mittelwert und dem Indikator ein Datensatz erzeugt werden, der gegebenenfalls ergänzt durch weitere Variablen oder Daten an die externe Empfängereinheit übertragen wird. Der Reifensensor kann durch Ermittlung der radialen Beschleunigung des Fahrzeugreifens in prinzipiell bekannter Weise die Laufleistung des Fahrzeugreifens bestimmen. Damit kann eine verbleibende Profiltiefe und eine Kilometerlaufleistung des Fahrzeugreifens gegenübergestellt werden.

In einer bevorzugten Ausführungsform wird der aktuelle gleitende Mittelwert auf der externen Empfängereinheit zur Ermittlung einer Profiltiefe des Fahrzeugreifens verwendet. Mit anderen Worten kann über die Analyse der Radialbeschleunigung am Innerliner der Reifenabrieb abgeschätzt werden. Damit kann direkt die verbleibende Profiltiefe des Fahrzeugreifens ermittelt werden.

Gemäß einem zweiten Erfindungsaspekt wird ein System zum Generieren und Übermitteln von optimierten reifenspezifischen Messdaten vorgeschlagen, wobei das System eine externe Empfängereinheit und einen Fahrzeugreifen mit einem Reifensensor umfasst, wobei der Reifensensor dazu eingerichtet ist,

> a) einen Radialbeschleunigungsverlauf während der Fahrt zu erfassen;
> b) eine Änderung der Radialbeschleunigung anhand des Radialbeschleunigungsverlaufs zu bestimmen;
> c) die Radialbeschleunigung betreffende Kenngrößen anhand der Änderung der Radialbeschleunigung zu bestimmen;
> d) einen aktuellen gleitenden Mittelwert für mindestens eine der bestimmten Kenngrößen auf Basis eines aktuellen Messwertes der jeweiligen Kenngröße sowie eines gleitenden Mittelwertes derselben Kenngröße einer vorhergehenden Messung sowie mit Hilfe von Gewichtungsfaktoren zu ermitteln; und
> e) den aktuellen gleitenden Mittelwert der jeweiligen Kenngröße an die externe Empfängereinheit zu übermitteln.

Vorzugsweise ist die externe Empfängereinheit eine stationäre Empfängereinheit. Die Empfängereinheit kann beispielsweise und nur exemplarisch an einer Hofeinfahrt, an einer Tankstelle, in einer Werkstatt oder an einer Waschanlage angeordnet sein. Die externe Empfängereinheit kann eine Recheneinheit, insbesondere ein Rechenzentrum, ein Computersystem, insbesondere ein "Personal Computer" (PC), eine Smartwatch oder ein Smartphone bzw. Mobiltelefon sein. Die externe Empfängereinheit kann die entsprechenden Daten erfassen und weiterverarbeiten. Die Empfängereinheit kann auch ein Speichermedium zur Speicherung der Daten umfassen. Die Empfängereinheit kann Mittel zum Abrufen von Daten und/oder Informationen umfassen. Es können auch mehrere externe Empfängereinheiten vorgesehen sein, die miteinander kommunizieren können.

Die externe Empfängereinheit ist bevorzugt dazu eingerichtet, den aktuellen gleitenden Mittelwert oder Daten, umfassend den aktuellen gleitenden Mittelwert, zu empfangen, wenn sich der Reifensensor in einem Empfangsbereich der externen Empfängereinheit befindet und/oder wenn die Wahrscheinlichkeit, dass sich der Reifensensor im Empfangsbereich der Empfängereinheit, einen Grenzwert überschreitet.

Zur Vermeidung von Wiederholungen wird im Übrigen auf die Ausführungen zum Verfahren gemäß dem ersten Erfindungsaspekt verwiesen. Die obigen Definitionen sowie Ausführungen zu technischen Effekten, Vorteilen und vorteilhaften Ausführungsformen des erfindungsgemäßen Verfahrens gelten entsprechend sinngemäß für das erfindungsgemäße System gemäß dem zweiten Erfindungsaspekt, und umgekehrt.

Im Folgenden wird ein Ausführungsbeispiel der Erfindung anhand der Zeichnungen näher erläutert, wobei gleiche Elemente mit dem gleichen Bezugszeichen versehen sind. Hierbei zeigt

Fig. 1 eine Draufsicht auf eine Fläche, auf welcher ein Fahrzeug fährt, zur Veranschaulichung des Aufbaus eines erfindungsgemäßen Systems zum Generieren und Übermitteln von optimierten reifenspezifischen Messdaten;

Fig. 2 eine stark schematische Seitenansicht eines Fahrzeugreifens des Fahrzeugs nach Fig. 1 während der Fahrt;

Fig. 3 eine schematische Darstellung eines Ausführungsbeispiels des erfindungsgemäßen Verfahrens zum Generieren und Übermitteln von optimierten reifenspezifischen Messdaten; und

Fig. 4 eine schematische erste Darstellung a) eines beispielhaften Radialbeschleunigungssignals eines Reifensensors und eine schematische zweite Darstellung b) einer Ableitung des Radialbeschleunigungssignals nach a) zur Veranschaulichung einer Änderungsrate Radialbeschleunigung;

wobei gleiche oder ähnliche Bauteile mit demselben Bezugszeichen versehen sind.

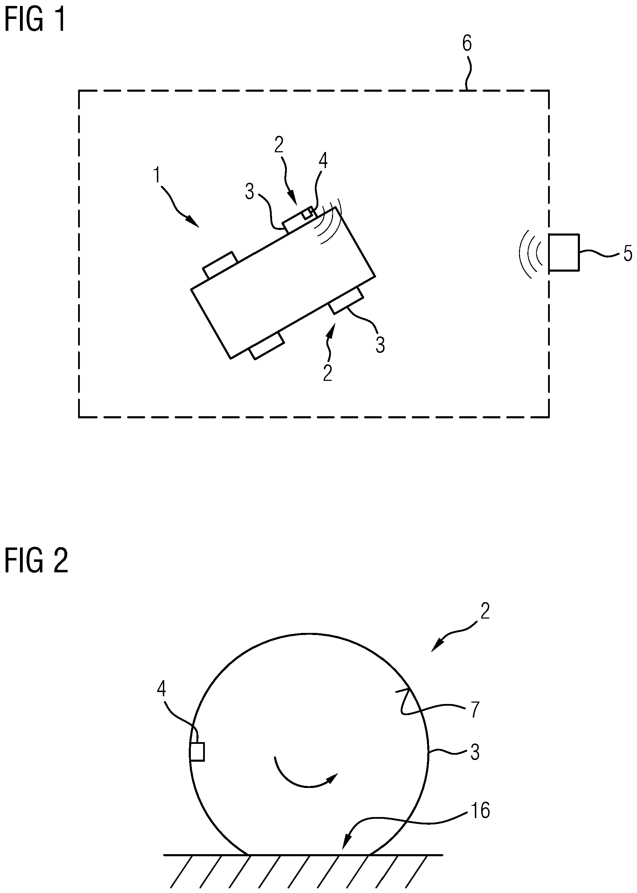

Fig. 1 zeigt ein Fahrzeug 1, das beispielsweise ein Bus sein kann. Das Fahrzeug 1 weist mehrere Räder 2 mit Fahrzeugreifen 3 auf, wobei an einem, mehreren oder allen Fahrzeugreifen 3 ein Reifensensor 4 angeordnet sein kann. Vorliegend weist exemplarisch nur einer der Fahrzeugreifen 3 einen Reifensensor 4 auf. Das Fahrzeug 1 befindet sich innerhalb eines Empfangsbereichs 6 einer stationären, externen Empfängereinheit 5, sodass der Reifensensor 4 Daten an die Empfängereinheit 5 übermitteln kann. Wenn sich der Reifensensor 4 innerhalb des Empfangsbereichs 6 befindet, kann ein Signal beispielsweise über Funk, an die Empfängereinheit 5 übermittelt oder von der Empfängereinheit 5 zur Übermittlung angefordert werden. Außerdem steht das Fahrzeug 1 still. Der Reifensensor 4 und die Empfängereinheit 5 sind Teil eines erfindungsgemäßen Systems zum Generieren und Übermitteln von optimierten reifenspezifischen Messdaten von dem Reifensensor 4 an die externe Empfängereinheit 5. Die Empfängereinheit 5 ist dazu eingerichtet, anhand der von dem Reifensensor 4 empfangenen Daten eine verbleibende Profiltiefe des Fahrzeugreifens 3 abzuschätzen.

Fig. 2 zeigt das Rad 2 mit dem im Fahrzeugreifen 3 integrierten Reifensensor 4 stark schematisch in der Seitenansicht. Der Reifensensor 4 ist an einer Innenseite 7 des Fahrzeugreifens 3, hier dem Innerliner, angeordnet. Der Reifensensor 4 ist derartig angeordnet und eingerichtet, dass darüber während der Fahrt des Fahrzeugs 1 insbesondere eine durch eine Verformung des Fahrzeugreifens 3 beeinflusste Radialbeschleunigung eines Messpunktes des Fahrzeugreifens 3 bestimmt werden kann. In Fig. 2 ist zudem stark übertrieben eine Aufstandsfläche 16 des Fahrzeugreifens 3 dargestellt, welcher die Radialbeschleunigung des Messpunktes des Fahrzeugreifens 3 mit jedem Umlauf beeinflusst.

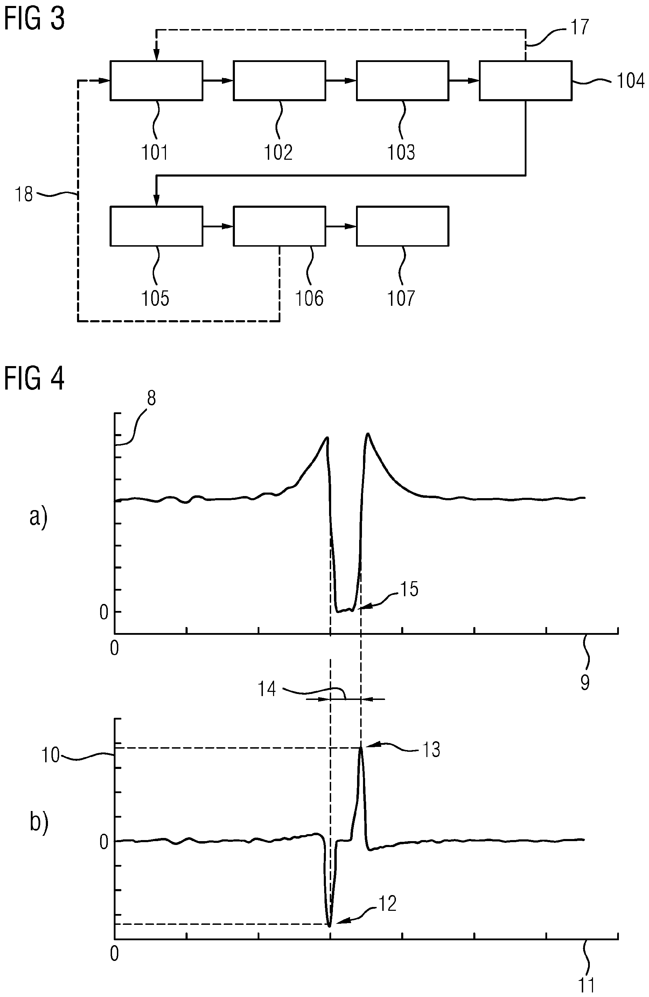

Fig. 3 veranschaulicht als Blockschaltbild einen Ablauf eines erfindungsgemäßen Verfahrens zum Generieren und Übermitteln von optimierten reifenspezifischen Messdaten vom Reifensensor 4 an die externe Empfängereinheit 5. Der Reifensensor 4 ist dazu eingerichtet, in einem ersten Verfahrensschritt 101 einen Radialbeschleunigungsverlauf des Fahrzeugreifens 3 zu erfassen. Ein solcher Radialbeschleunigungsverlauf ist beispielhaft in Fig. 4 a) gezeigt, bei dem an der Ordinate 8 die Radialbeschleunigung und an der Abszisse 9 die Zeit aufgetragen sind. Die Messdaten des Radialbeschleunigungsverlaufs werden mittels eines Tiefpassfilters oder eines Bandpassfilters geglättet. In Fig. 4 a) ist der Radialbeschleunigungsverlauf für eine Umdrehung des Rades 2 während der Fahrt dargestellt, wobei die Beschleunigung an der Aufstandsfläche 16 des Fahrzeugreifens 3 im Bereich 15 der Fig. 4 a), der als Latschdurchgang des Fahrzeugreifens 3 zu verstehen, auf 0 absinkt. Im Latschdurchgang ist der Wert der Radialbeschleunigung 0. Links und rechts des Latschdurchgangs bzw. vor und nach dem Bereich 15, also bevor der Messpunkt in den Latschdurchgang gelangt bzw. nachdem der Messpunkt aus dem Latschdurchgang austritt, ist die Radialbeschleunigung jeweils höher als während des übrigen Umlaufs des Fahrzeugreifens 3.

In einem nachfolgenden zweiten Verfahrensschritt 102 wird durch Ableitung des Radialbeschleunigungsverlaufs eine Änderung der Radialbeschleunigung bzw. eine Änderungsrate der Radialbeschleunigung bestimmt. Die Änderungsrate der Radialbeschleunigung ist in der unteren Darstellung der Fig. 4 im Bereich b) abgebildet, wobei an der Ordinate 10 die Änderungsrate und an der Abszisse 11 die Zeit analog zu Fig. 4 a) aufgetragen sind.

Aus der Änderungsrate der Radialbeschleunigung werden Kenngrößen bestimmt (dritter Verfahrensschritt 103). Die die Radialbeschleunigung betreffenden Kenngrößen sind vorliegend ein Minimalwert 12 der Radialbeschleunigung im Bereich eines Randes einer Bodenaufstandsfläche des Fahrzeugreifens 3, ein Maximalwert 13 der Radialbeschleunigung im Bereich des Randes der Aufstandsfläche 16 des Fahrzeugreifens 3 sowie ein zeitlicher Abstand 14 zwischen dem Minimalwert und dem Maximalwert der Radialbeschleunigung im Bereich des Randes der Aufstandsfläche 16 des Fahrzeugreifens 3.

In einem vierten Verfahrensschritt 104 erfolgt eine Qualitätskontrolle des Minimalwerts 12, des Maximalwerts 13 und des zeitlichen Abstands 14 der aktuellen Radialbeschleunigungsmessung. Und zwar wird geprüft, ob die bestimmten Kenngrößen bzw. die bewerteten Kenngrößen in Bezug auf Kenngrößen einer vorhergehenden Messung innerhalb von vorgegebenen Grenzwerten liegen. Ein aktueller gleitender Mittelwert für die jeweilige Kenngröße wird nachfolgend nämlich nur dann bestimmt, wenn die jeweilige bestimmte Kenngröße in Bezug auf dieselbe Kenngröße einer vorhergehenden Messung innerhalb von vorgegebenen Grenzwerten liegt. Damit wird verhindert, dass fehlerhafte oder unrealistische Messungen oder Messwerte den neu ermittelten aktuellen gleitenden Mittelwert und damit auch künftige Mittelwertbestimmungen von Kenngrößen verfälschen, beispielsweise wenn die Messung des Radialbeschleunigungsverlaufs in ungünstigen Fahrsituationen erfolgt ist.

Wenn die Kenngrößen den geforderten Qualitätsanforderungen entsprechen, wird in einem fünften Verfahrensschritt 105 ein Mittelwertfilter angewendet, womit für jede der genannten Kenngrößen ein aktueller gleitender Mittelwert gebildet wird, und zwar jeweils unter Berücksichtigung und auf Basis eines gleitenden Mittelwertes derselben Kenngröße einer vorhergehenden Messung sowie unter Hinzuziehung von Gewichtungsfaktoren für die Variablen der früheren Messung sowie der aktuellen Messung. Vorliegend wird der aktuelle gleitende Mittelwert (M(neu)) bestimmt durch

$$M(neu) = (M(alt) * (1-w) + X(Messung) * w),$$

, wobei M(alt) der gleitende Mittelwert der Kenngröße einer vorhergehenden, insbesondere der letzten vorhergehenden Messung, X(Messung) der Wert der Kenngröße der aktuellen Messung und w ein Gewichtungsfaktor zwischen 0 und 1 sind.

Der Mittelwertfilter bzw. der Filter eines gleitenden Mittelwertes wird genutzt, um die gewünschten Daten fortlaufend zu aktualisieren und aufeinander aufbauend zu ermitteln. Dadurch muss nur der laufende Mittelwert der jeweiligen Kenngröße gespeichert werden.

Wenn die Kenngrößen den geforderten Qualitätsanforderungen nicht entsprechen, werden die Verfahrensschritte 101 bis 104 unmittelbar oder in einem vordefinierten zeitlichen Abstand oder einer bestimmten Betriebssituation wiederholt, bis die bestimmten Kenngrößen bzw. die bewerteten Kenngrößen in Bezug auf Kenngrößen einer vorhergehenden Messung innerhalb von vorgegebenen Grenzwerten liegen. Dies soll durch den ersten gestrichelten Pfeil 17 in Fig. 3 veranschaulicht werden.

Im Anschluss an die Ermittlung der aktuellen gleitenden Mittelwerte werden diese direkt oder umgewandelt zu den aktuellen gleitenden Mittelwert betreffenden Daten an die externe Empfängereinheit 5 übermittelt. Dies erfolgt jedoch nur dann, wenn sich der Reifensensor 4 in der Nähe der Empfängereinheit 5, nämlich innerhalb des Empfangsbereichs 6, befindet. Der aktuelle gleitende Mittelwert oder entsprechende Daten wird bzw. werden nur an die externe Empfängereinheit 5 übermittelt, wenn die Wahrscheinlichkeit, dass sich der Reifensensor 4 im Empfangsbereich 6 der Empfängereinheit 5 befindet, einen Grenzwert überschreitet. Diese Wahrscheinlichkeitsabwägung erfolgt im sechsten Verfahrensschritt 106. Wenn eine interne Beschleunigungsmessung des Fahrzeugs 1 ergibt, dass es sich im Stillstand befindet, ist der Grenzwert überschritten und die Daten können im siebten Verfahrensschritt 107 an die Empfängereinheit 5 übermittelt werden.

Wenn die Wahrscheinlichkeit unterhalb eines Grenzwertes liegt, können die Verfahrensschritte 101 bis 106 in vordefinierten zeitlichen Abständen und/oder in bestimmten Betriebssituationen, also regelmäßig, wiederholt werden, bis die Wahrscheinlichkeit, dass sich der Reifensensor 4 in einer zur Übermittlung geeigneten Umgebung der Empfängereinheit 5 befindet, den Grenzwert überschreitet. Dies soll durch den zweiten gestrichelten Pfeil 18 in Fig. 3 veranschaulicht werden.

Damit können bei dem genannten Bus während des Betriebs fortlaufend aktuelle bzw. optimierte gleitende Mittelwerte gebildet werden, deren Datensätze die Datensätze der gleitenden Mittelwerte der vorherigen Messung ersetzen. Erst wenn der Bus nach Beendigung des Betriebs zurück in eine Werkstatt, Halle, oder dergleichen, insbesondere in dem Empfangsbereich 6 positioniert wird, beispielsweise für Wartungsarbeiten, Schichtwechsel oder dergleichen, kann der aktuellste Datensatz mit den optimierten gleitenden Mittelwerten an die Empfängereinheit 5 zur Weiterverarbeitung übermittelt werden.

Die stationäre, externe Empfängereinheit 5 kann den aktuellen Mittelwert empfangen, optional speichern und so weiterverarbeiten, dass eine verbleibende Profiltiefe des Fahrzeugreifens 3 bestimmt wird. Die an die Empfängereinheit 5 übermittelten Daten können ferner einen Indikator für eine Laufleistung des Fahrzeugreifens 3 umfassen, um beispielsweise eine Profiltiefenabschätzung einer Kilometerlaufleistung des Rades 2 des Fahrzeugs 1 gegenüberzustellen.

Bezugszeichenliste

1 Fahrzeug
2 Rad
3 Fahrzeugreifen
4 Reifensensor
5 Empfängereinheit
6 Empfangsbereich der Empfängereinheit
7 Innenseite
8 Ordinate
9 Abszisse
10 Ordinate
11 Abszisse
12 Minimalwert
13 Maximalwert
14 Zeitlicher Abstand
15 Bereich
16 Aufstandsfläche
17 Erster Pfeil
18 Zweiter Pfeil

**Patentansprüche**

1. Verfahren zum Generieren und Übermitteln von optimierten reifenspezifischen Messdaten von einem Reifensensor (4) eines Fahrzeugreifens (3) an eine externe Empfängereinheit (5), umfassend die Schritte:

   a) Messen eines Radialbeschleunigungsverlaufs mittels des Reifensensors (4) während der Fahrt;
   b) Bestimmen einer Änderung der Radialbeschleunigung anhand des Radialbeschleunigungsverlaufs;
   c) Bestimmen von die Radialbeschleunigung betreffenden Kenngrößen anhand der Änderung der Radialbeschleunigung;
   d) Ermitteln eines aktuellen gleitenden Mittelwertes für mindestens eine der Kenngrößen auf Basis eines aktuellen Messwertes der jeweiligen Kenngröße sowie eines gleitenden Mittelwertes derselben Kenngröße einer vorhergehenden Messung sowie mit Hilfe von Gewichtungsfaktoren;
   e) Übermitteln des aktuellen gleitenden Mittelwertes der jeweiligen Kenngröße an die externe Empfängereinheit (5).

2. Verfahren nach Anspruch 1, **dadurch gekennzeichnet, dass** der aktuelle gleitende Mittelwert der jeweiligen Kenngröße definiert wird durch

$$M(neu) = (M(alt) * (1-w) + X(Messung) * w),$$

   wobei w der Gewichtungsfaktor ist, M(alt) der gleitende Mittelwert einer Kenngröße nach einer vorhergehenden Messung ist, und X(Messung) der aktuelle Messwert der jeweiligen Kenngröße auf Basis der Änderung der Radialbeschleunigung ist, oder dass
   der aktuelle gleitende Mittelwert der jeweiligen Kenngröße definiert wird durch

$$M(neu) = (M(alt) * W + X(Messung)) / (W+1),$$

   wobei W der Gewichtungsfaktor ist, M(alt) der gleitende Mittelwert einer Kenngröße einer vorhergehenden Messung ist, und X(Messung) der aktuelle Messwert der jeweiligen Kenngröße auf Basis der Änderung der Radialbeschleunigung ist.

3. Verfahren nach Anspruch 1 oder Anspruch 2, **dadurch gekennzeichnet, dass** die jeweilige die Radialbeschleunigung betreffende Kenngröße ein Minimalwert der Radialbeschleunigung im Bereich eines Randes einer Bodenaufstandsfläche des Fahrzeugreifens (3), ein Maximalwert der Radialbeschleunigung im Bereich des Randes der Bodenaufstandsfläche des Fahrzeugreifens (3), ein zeitlicher Abstand zwischen dem Minimalwert und dem Maximalwert der Radialbeschleunigung im Bereich des Randes der Bodenaufstandsfläche des Fahrzeugreifens (3) und/oder ein zeitlicher Abstand von Minimum zu Maximum im Verhältnis zur Umlaufzeit des Fahrzeugreifens (3) ist.

4. Verfahren nach einem der vorhergehenden Ansprüche, **dadurch gekennzeichnet, dass** die Messdaten des Radialbeschleunigungsverlaufs mittels eines Filters geglättet werden.

5. Verfahren nach Anspruch 4, **dadurch gekennzeichnet, dass** der Filter ein Tiefpassfilter oder ein Bandpassfilter ist.

6. Verfahren nach einem der vorhergehenden Ansprüche, **dadurch gekennzeichnet, dass** der aktuelle gleitende Mittelwert für die jeweilige Kenngröße bestimmt wird, wenn die jeweilige bestimmte Kenngröße in Bezug auf dieselbe Kenngröße einer vorhergehenden Messung innerhalb von vorgegebenen Grenzwerten liegt.

7. Verfahren nach einem der vorhergehenden Ansprüche, **dadurch gekennzeichnet, dass** der aktuelle gleitende Mittelwert an die externe Empfängereinheit (5) übermittelt werden, wenn eine Wahrscheinlichkeit, dass sich der Reifensensor (4) in einem Empfangsbereich (6) der externen Empfängereinheit (5) befindet einen Grenzwert überschreitet.

8. Verfahren nach einem der vorhergehenden Ansprüche, **dadurch gekennzeichnet, dass** der aktuelle gleitende Mittelwert durch einen Indikator für eine Laufleistung des Fahrzeugreifens (3) ergänzt wird.

9. Verfahren nach einem der vorhergehenden Ansprüche, **dadurch gekennzeichnet, dass** der aktuelle gleitende Mittelwert auf der externen Empfängereinheit (5) zur Ermittlung einer Profiltiefe des Fahrzeugreifens (3) verwendet werden.

10. System zum Generieren und Übermitteln von optimierten reifenspezifischen Messdaten, das System umfassend eine externe Empfängereinheit (5) und einen Fahrzeugreifen (3) mit einem Reifensensor (4), wobei der Reifensensor (4) dazu eingerichtet ist,

   a) einen Radialbeschleunigungsverlauf des Fahrzeugreifens (3) während der Fahrt zu erfassen;
   b) eine Änderung der Radialbeschleunigung anhand des Radialbeschleunigungsverlaufs zu bestimmen;
   c) die Radialbeschleunigung betreffende Kenngrößen anhand der Änderung der Radialbeschleunigung zu bestimmen;
   d) einen aktuellen gleitenden Mittelwert für mindestens eine der bestimmten Kenngrößen auf Basis eines aktuellen Messwertes der jeweiligen Kenngröße sowie eines gleitenden Mittelwertes derselben Kenngröße einer vorhergehenden Messung sowie mit Hilfe von Gewichtungsfaktoren zu ermitteln; und
   e) den aktuellen gleitenden Mittelwert der jeweiligen Kenngröße an die externe Empfängereinheit (5) zu übermitteln.

11. System nach Anspruch 10, **dadurch gekennzeichnet, dass** die externe Empfängereinheit (5) eine stationäre Empfängereinheit ist.

FIG 1

FIG 2

FIG 3

FIG 4

Europäisches
Patentamt

European
Patent Office

Office européen
des brevets

**Nummer der Anmeldung**

EP 24 21 3468

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 4 140 782 A1 (BRIDGESTONE EUROPE NV SA [BE]) 1. März 2023 (2023-03-01) * Absatz [0039] - Absatz [0099]; Abbildungen 1-9 * | 1-11 | INV. B60C11/24 |
| A | EP 4 101 659 A1 (GOODYEAR TIRE & RUBBER [US]) 14. Dezember 2022 (2022-12-14) * Absatz [0023] - Absatz [0047]; Abbildungen 1-10 * | 1-11 | |
| A | EP 3 341 223 B1 (CONTINENTAL REIFEN DEUTSCHLAND GMBH [DE]) 10. Juli 2019 (2019-07-10) * Absatz [0043] - Absatz [0049]; Abbildungen 1-4 * | 1-11 | |

RECHERCHIERTE
SACHGEBIETE (IPC)

B60C

Der vorliegende Recherchenbericht wurde für alle Patentansprüche erstellt

| Recherchenort | Abschlußdatum der Recherche | Prüfer |
|---|---|---|
| München | 4. März 2025 | Billen, Karl |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 21 3468

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2025

| Im Recherchenbericht angeführtes Patentdokument | | Datum der Veröffentlichung | Mitglied(er) der Patentfamilie | | Datum der Veröffentlichung |
|---|---|---|---|---|---|
| EP 4140782 | A1 | 01-03-2023 | CN | 118176141 A | 11-06-2024 |
| | | | EP | 4140782 A1 | 01-03-2023 |
| | | | EP | 4392269 A1 | 03-07-2024 |
| | | | JP | 2024532888 A | 10-09-2024 |
| | | | US | 2024375458 A1 | 14-11-2024 |
| | | | WO | 2023025885 A1 | 02-03-2023 |
| EP 4101659 | A1 | 14-12-2022 | BR | 102022010187 A2 | 27-12-2022 |
| | | | CN | 115519942 A | 27-12-2022 |
| | | | EP | 4101659 A1 | 14-12-2022 |
| | | | US | 2022388348 A1 | 08-12-2022 |
| EP 3341223 | B1 | 10-07-2019 | CN | 107921828 A | 17-04-2018 |
| | | | DE | 102015216210 A1 | 02-03-2017 |
| | | | EP | 3341223 A1 | 04-07-2018 |
| | | | US | 2018180463 A1 | 28-06-2018 |
| | | | WO | 2017032466 A1 | 02-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180188025 A1